(19) Europäisches Patentamt
European Patent Office
Office européen des brevets

(11) Veröffentlichungsnummer : **0 105 285 B2**

(12) # NEUE EUROPÄISCHE PATENTSCHRIFT

(45) Veröffentlichungstag der neuen Patentschrift : **02.12.92 Patentblatt 92/49**

(51) Int. Cl.$^5$ : **D01F 6/92,** D01F 6/84, C08L 67/02, C08G 63/68

(21) Anmeldenummer : **83900833.1**

(22) Anmeldetag : **16.03.83**

(86) Internationale Anmeldenummer : **PCT/CH83/00035**

(87) Internationale Veröffentlichungsnummer : **WO 83/03432 13.10.83 Gazette 83/24**

(54) **STRECKTEXTURIERTER, BASISCH FÄRBBARER POLYESTERFADEN.**

(30) Priorität : **30.03.82 CH 1935/82**

(43) Veröffentlichungstag der Anmeldung : **18.04.84 Patentblatt 84/16**

(45) Bekanntmachung des Hinweises auf die Patenterteilung : **02.10.85 Patentblatt 85/40**

(45) Bekanntmachung des Hinweises auf die Entscheidung über den Einspruch : **02.12.92 Patentblatt 92/49**

(84) Benannte Vertragsstaaten : **AT BE DE FR GB NL**

(56) Entgegenhaltungen :
**DE-A- 2 241 718**
**DE-A- 2 458 373**
**DE-B- 1 258 545**
**FR-A- 2 491 479**

(56) Entgegenhaltungen :
**LU-A- 60 722**
**US-A- 3 725 351**
**US-A- 3 745 141**
**US-A- 3 772 872**
**Ullmanns Encyklopädie der technischen Chemie, Bd. 11 (1976), Seiten 280-282**

(73) Patentinhaber : **Rhône-Poulenc Viscosuisse SA**
**CH-6020 Emmenbrücke (CH)**

(72) Erfinder : **HUMBRECHT, Rémy**
**Eichenstrasse 22**
**CH-6015 Reussbühl (CH)**
Erfinder : **SCHMIEDER, Heinrich**
**Benziwil 21**
**CH-6020 Emmenbrücke (CH)**

(74) Vertreter : **Herrmann, Peter Johannes**
**c/o Rhône-Poulenc Viscosuisse SA**
**Patentabteilung R1P**
**CH-6020 Emmenbrücke (CH)**

EP 0 105 285 B2

## Beschreibung

Die Erfindung betrifft einen strecktexturierten, basisch färbbaren Polyesterfaden mit verbesserter Festigkeit.

Polyesterfilamente mit Affinität für basische Farbstoffe sind schon bekannt und werden z. B. gemäß CH-A-373 559 durch Zusatz von Metallsulfonaten erhalten. Solche Polyester können gemäß US-A-3 772 872 sogar in einem Schnellspinnprozeß schmelzgesponnen werden. Die bevorzugten Zusatzstoffe sind Sulfonsäuresalze, welche die Gruppierung

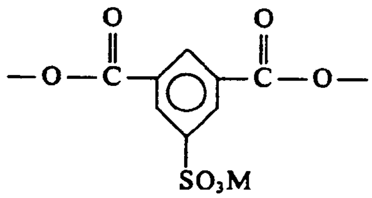

enthalten, wobei M ein einwertiges Metall bedeutet, und bei der Herstellung des Polyethylenterephthalates zugegeben werden.

Diese Polyesterfilamente haben jedoch den Nachteil, daß ihre mechanischen Eigenschaften, namentlich ihre Festigkeit, besonders wenn sie einer Falschdrallstrecktexturieroperation unterworfen wurden, schlecht sind. Dadurch sind sie allein oder zusammen mit anderen synthetischen und/oder natürlichen Fasern oder Filamenten schlecht verarbeitbar.

Aus US-A-3 725 351 ist bekannt, daß Copolyester, die sowohl eine Metallsulfonatverbindung als auch ein Polyalkylenoxid, resp. ein Polyethylenoxid vom Molekulargewicht 500-6000, oder ein Glykol der allgemeinen Formel $HO(CH_2)_nOH$ mit $2 < n < 10$ enthalten, bessere Affinitäten gegen basische und Dispersionsfarbstoffe aufweisen. Ebenfalls ist aus US-A-3 745 141 bekannt, daß wenn man arylaliphatische sulfonierte Polyether dem Polyester zumischt, die Farbstoffaffinität der hergestellten glatten Fäden erhöht wird. Die drei oben erwähnten Patente beschränken sich auf glatte Garne, wo man nur die Farbstoffaffinität, nicht aber das Texturierverhalten und die Weiterverarbeitung des Fadens in Betracht gezogen hat.

Die Aufgabe der vorliegenden Erfindung ist es, einen strecktexturierten, basisch färbbaren Polyesterfaden herzustellen, der eine höhere Festigkeit aufweist und sich besser verarbeiten läßt.

Der Begriff »strecktexturiert« bezieht sich auf Garne, die durch Falschzwirnen auf übliche Art erhalten werden. Die höhere Festigkeit des erfindungsgemäßen Fadens ist bei Falschzwirn-Strecktexturierung von schnellgesponnenen POY-Fäden besonders ausgeprägt. Die Strecktexturierung kann sowohl mit Magnetspindel- als auch mit Friktions-Aggregaten durchgeführt werden. Der Titer des Fadens ist nicht kritisch. Der erfindungsgemäße Faden kann auch anschließend oder gleichzeitig verwirbelt werden.

Gegenstand der Erfindung ist ein strecktesturierter, basisch färbbarer Polyesterfaden mit verbesserter Festigkeit, der dadurch gekennzeichnet ist, dass er 3,0 - 3,4 Mol.-% eines Metallsulfonats mit folgender Struktureinheit

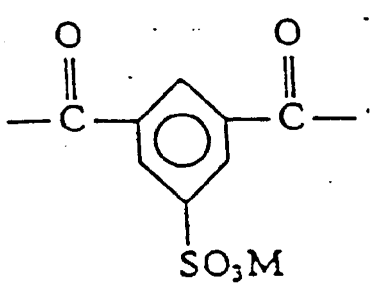

wobei M gleich Na oder K ist, und 4,0 - 6,0 Gew.-% einer Verbindung A mit folgenden Struktureinheiten $-0-(C_{x1}H_{2x1}O)_{y1}-$, wobei $_{x1} \geqq 2$ und $_{x1y1} \geqq 20$ ist, enthält, die vor Beginn der Veresterung/Umesterung zugegeben wurden.

Die Zusätze mit den obenerwähnten Struktureinheiten werden bei einer Veresterungs- oder Umesterungsreaktion in die Polyesterkette eingebaut.

Dieser erfindungsgemäß modifizierte Polyesterfaden zeigt eine überraschend hohe Festigkeit, die eine gute Verarbeitung, allein oder zusammen mit anderen synthetischen und/oder natürlichen Filamenten oder Fasergarnen, erlaubt. Dieser modifizierte Faden ist außerdem weiß und besitzt neben guten textiltechnischen Eigenschaften eine besonders gute Affinität für basische Farbstoffe. Weiter zeigt er bei Färbung mit Dispersionsfarbstoffen eine größere Farbtiefe.

Unter Filament oder Faden versteht man hier ein Garn mit mehreren Einzelfilamenten.

Die Herstellung der Polyester kann in üblicher Weise erfolgen, z. B. im Falle der Herstellung von Copolgestern mit Polyethylenterephthalat, entweder durch Direktkondensation von Ethylenglykol und Terephthalsäure oder durch Umesterung von Dimethylterephthalat mit Ethylenglykol und anschließende Polykondensation des zunächst gebildeten Diglykolterephthalates. Anstelle von Ethylenglykol können noch andere Diole wie 1,3-Propandiol, 1,4-Butandiol, 1,6-Hexandiol oder Cyclohexan-Dimethanol und neben der Terephthalsäure resp. des Dimethylterephthalates noch andere Dicarbonsäuren wie Isophthalsäure, Adipinsäure, Azelainsäure, Dimerfettsäure resp. die Alkylester dieser Säuren zusätzlich eingesetzt werden.

Die Zugabe des Sulfonsäuresalzes sowie der Verbindung A erfolgt vor Beginn der Veresterung der Terephthalsäure resp. Umesterung des Dialkylterephtalates mit dem Glycol. Das Freisetzen des Wassers, resp. Methanols bei der Ver- resp. Umesterung sowie des Glycols bei der anschließenden Polykondensation erfolgt nach bekannter Weise mittels Katalysatoren und bei höheren Temperaturen wie für die Herstellung des Homopolyesters.

Die zugesetzte Menge des Metallsulfonats liegt zwischen 3.0 und 3.4 Mol-%. Als Metallsulfonat verwendet man bevorzugt das Sulfonat der 3,5-Isophthalsäure, wenn der Polyester nach einem Veresterungsverfahren hergestellt wird, resp. des 3,5-Isophthalsäure-Dimethylesters, wenn der Polyester nach einem Umesterungsverfahren hergestellt wird. Es wird vorzugsweise das Na-Salz eingesetzt.

Die zugesetzte Menge der Verbindung A liegt zwischen 4.0 und 6.0 Gew.-%.

Die Verbindung A ist bevorzugt ein Polyalkylenglykol. Die Polyalkylenglykole werden auch als Polyglykole oder als Polyalkylenether oder als Polyoxyalkylenglykole oder auch als Polyalkylenoxidglykole bezeichnet. Die Polyethylenglykole werden bevorzugt eingesetzt und sind als CARBOWAX® oder POLYOX® kommerziell erhältlich. Ihr mittleres Molekular gewicht kann zwischen 400 und 50 000 liegen. Andere Polyalkylenglykole, die Polypropylenglykole, die Polytetrahydrofurane, auch Polytetramethylenglykole genannt, z.B. die POLYRAN®-Produkte von BAYER, sowie statistische Copolyalkylenglykole, wie die Polyethylen-propylenglykole sind ebenfalls kommerziell erhätlich. Die Molekulargewichtsverteilung ist bei diesen Polyalkylenglykolen relativ breit. Produkte mit enger Molekulargewichtsverteilung, frei von ungefärbten oder säurehaltigen Verunreinigungen, werden bevorzugt eingesetzt.

Als Verbindung A, kann erfindungsgemäß die Bis(hydroxyethyl)-Dimerfettsäure mit folgender chemischer Zusammensetzung

$$HOCH_2CH_2OOC\text{-}C_{34}H_{68}COOCH_2CH_2OH$$

verwendet werden. Das letztgenannte Produkt wird sowohl in einem Veresterungs- wie Umesterungsverfahren bei der Polyesterherstellung eingesetzt.

Bei den Verbindungen A, welche erfingungsgemäß noch eingesetzt werden können, handelt es sich um Verbindungen die sowohl eine Gruppierung $-(CH_2)_y-$ wie die Gruppierung $-O-(C_{x1}\,H_{2x1}O)_{y1}-$, wobei $x_1 \geqq 2$, $y \geqq 20$ und $x_1 \cdot y_1 \geqq 20$ sind, enthalten. Solche Verbindungen werden z. B. auch von Unilever Emery mit der Dimerfettsäure und mit Polyalkylenglykolen mit $x_1 = 2$ und $x_1 \cdot y_1 \geqq 20$ nach bekannten Veresterungsverfahren hergestellt und eingesetzt. Die so erhaltenen Polyalkylenglykolester sind z. B. die Produkte UNEM 9991 und UE 80385 mit folgender chemischer Zusammensetzung

$$HOCH_2CH_2OOCC_{34}H_{68}COO(CH_2CH_2O)_{y1}COC_{34}H_{68}COOCH_2CH_2OH$$

wobei beim ersten Produkt das Polyalkylenglykol mit Molmasse 1500, d. h. $y_1$ gleich 33, und beim zweiten Produkt das Polyalkylenglykol mit Molmasse 1000, d. h. $y_1$ gleich 22, eingesetzt wurde. Andere Verbindungen mit $y_1$ größer als 10, z. B. $y_1 = 90$ oder 200 sind selbstverständlich auch einsetzbar. Diese Verbindungen haben reaktive Endgruppen, die es erlauben, daß das Produkt in den Polyester eingebaut werden kann. Zur Herstellung von Polyalkylenglykolestern können statt Fettsäure auch andere Dicarbonsäuren, wie Adipin- oder Terephthalsäure, eingesetzt werden.

Zu den Verbindungen A, die beide Gruppierungen $-(CH_2)_y-$ und $-(C_{x1}H_{2x1}O)y_1$ enthalten, gehören auch die Polyalkylenglykolesteramide. Für die Herstellung von diesen Verbindungen, z. B. des Handelsprodukt UNEM 9993 von Unilever Emery werden neben Dimerfettsäure mit $y = 34$ und Polyethylenglykol mit $x_1 = 2$ und $y_1 = 22$, noch Ethylendiamin als Bindungsglied eingesetzt.

Andere Verbindungen A, welche gemäß Erfindung ebenfalls eingesetzt werden können und Polyalkylenglykol-Gruppierungen enthalten, sind z. B. des ethoxylierte Triricinoleat des Glycerins mit 12 bis 60 Kohlenstoffatomen oder ethoxylierte tertiare Amine mit folgender chemischer Zusammensetzung

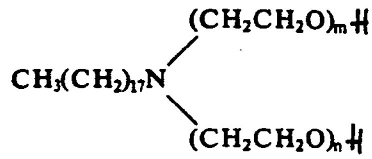

mit m+n=35 oder die Tetrole, welche in CH-A-587 930, Spalte 2, beschrieben sind.

Dem Rest, welcher das Polyalkylenglykol trägt wird solange er kurzkettig ist, wenig Bedeutung zugeschrieben. Er darf jedoch die üblichen Fadeneigenschaften wie Reißkraft, Weißgrad nicht zusätzlich verschlechtern. Er erlaubt nur das Einbringen der erfindungsgemäßen Gruppierungen in die Polymerkette. So werden allgemein bei der Herstellung von Polyethylenterephthalat resp. des basisch färbbaren Polyesters Derivate eingesetzt, die Carboxylendgruppen im Falle des Veresterungsverfahrens mit Terephthalsäure oder Ester- bzw. Alkohol-Endgruppen im Falle des Umesterungsverfahrens mit Dimethylterephthalat enthalten.

Der Faden gemäß Erfindung enthält 5 bis 100% des basisch färbbaren Polyesterfilamentes, d.h. zwischen 0 und 95% einer zweiten Komponente.

Im Falle, wo der erfindungsgemäße Faden aus 100% basisch färbbaren Polyesterfilamenten besteht, wird der modifizierte Polyester schnellgesponnen, d.h. zwischen 2700 und 4000 m/min aufgewickelt und danach falschdrallstrecktexturiert.

Im Falle, wo der erfingungsgemäße Faden weniger als 100% basisch färbbare Polyesterfilamente enthält, werden Herstellungsverfahren, wie z. B. gemäß EP 22 065, eingesetzt. In diesem Falle wird der basisch färbbare Polyester zusammen mit einem zweiten künstlichen Polymer, wie Polyester oder Polyamid gesponnen und anschließend strecktexturiert. Es ist auch möglich, die beiden Polymere separat zu spinnen und erst bei der Strecktexturierung zusammenzuführen. Die so hergestellten Filamente sind als solche verwendbar oder werden mit künstlichen Filamenten oder Stapelfasergarnen aus Polyester, Polyacryl, Viskose oder Polyamid, oder natürlichen Fasern aus Wolle oder Baumwolle zu Fäden gefachtet.

Dem modifizierten basisch färbbaren Polyester können zur Verbesserung der schmelze- und thermooxydativen Beständigkeit Stabilisatoren wie Natriumacetat und besondere Antioxydantien wie IRGANOX® 1222 oder IRGANOX® 259 von Ciba-Geigy zugegeben werden. Eine mehr oder weniger ausgeprägte Mattierung wird durch Zusatz von bis 2% eines Titandioxide vom Anatas-Typ erhalten.

Im folgenden werden Einzelheiten über Herstellung und chemische Eigenschaften des Polymers, welches für Fäden gemäß Erfindung eingesetzt wird, beschrieben.

Polymer-Herstellung

In einem Laborautoklaven gibt man 6,2 kg Ethylenglycol und 10 kg Dimethylterephthalat sowie 300 g des Mononatriumsalzes des 3,5-Sulfoisophthalsäure-Dimethylesters (SIP) und 300 g eines Polyethylenglykols mit Molmasse 4000 als Verbindung A. Als Umesterungskatalysator werden 5 g kristallisiertes Manganacetat sowie 13 g kristallisiertes Natriumacetat zugegeben. Die Mischung ist im Laufe von 2,5 Stunden auf 230°C erhitzt, wobei das freiwerdende Methanol und der Glykolüberschuß unter Normaldruck abdestillieren. Bei 230°C gibt man nacheinander die folgenden Substanzen zu: 3 g phosphorige Säure, 50 g Titandioxid und 3,5 g Antimontrioxid. Beim Aufheizen bis 280°C wird der Druck bis unter 0,5 mbar gesenkt. Nach 3,5 h wird durch Einleiten von Stickstoff das Vakum gebrochen, die Polyethylenterephthalat-Schmelze aus dem Autoklaven in Bandform ausgetragen, gekühlt und das erstarrte Polymer geschnitten.

Das Granulat zeigt bei der DSC-Analyse einen Schmelzpunkt von 250°C und einen Diethylenglykol-Gehalt von 1,2 Gew.-%. Das Polymer ist weiß und weist eine Carboxylendgruppen-Konzentration von 30 mol/t auf. Die Grenzviskosität gemessen bei 25°C in einem Gemisch von Phenol/Tetrachlorethan 1:1 gemäß H. Frind, Faserforschung (1954), S. 296, beträgt 0,62.

Nach dem Trocknen unter Vakuum oder mit heißer Luft auf einen Wassergehalt von weniger als 0,01 Gew.-%, wird der Polyester in bekannter Weise durch Spinndüsen gemäß folgenden Beispielen versponnen.

Beispiele 1 bis 2

Die Beispiele 1 bis 2 beschreiben die Herstellung von einheitlichen Fäden aus basisch färbbaren, strecktexturierten Filamenten.

In Anlehnung an das obenbeschriebe Vorgehen wurden 2 verschiedene Polymere aus Polyethylenterephthalat und Zusätzen von SIP und Verbindung A gemäß Tabelle 1 hergestellt.

Tabelle 1

| Beispiel | Zusatz SIP*) (%) | Zusatz A**) (%) | $x_1$ | y bzw. $y_1$ | $x_1 \cdot y_1$ | Relative Festigkeit der texturierten Filamente (%) |
|---|---|---|---|---|---|---|
| 1 (Vergleich) | 3,4 | 0 | | | | 100 |
| 2) | 3,0 | 4,0 | $x_1 = 2$ | $y_1 = 34$ | 68 | 120 |

*) SIP = Natriumsalz des 3,5-Sulfoisophthalsäure-Dimethylesters.
**) A = Polyethylenglykol.

Das Filament von Beispiel 1 ist gemäß dem bisherigen Stand der Technik hergestellt, währenddem das Filament des Beispiels 2 gemäß der Erfindung hergestellt ist.

Die Polymere wurden auf einer üblichen Spinnmaschine extrudiert, anschließend gekühlt, konvergiert, mit Präparation versehen und bei 3100 m/min aufgewickelt. Die Filamente bestanden aus 12 Einzelfilamenten und wiesen einen Titer von 100 dtex auf. Diese Filamente wurden anschließend einer Magnetspindel-Strecktexturiermaschine vorgelegt und mit einem Streckverhältnis von 1,45 mit einem Falschzwirn von 3500 T/m bei einer Temperatur von 190°C und bei einer Geschwindigkeit von 85 m/min falschzwirnstrecktexturiert. Die strecktexturierten Filamente wurden mit einem Zugprüfgerät TEXTIMAT der Firma ZWICK, Ulm (BRD), auf Festigkeit geprüft. Die gemessenen Festigkeiten sind bezogen auf die Festigkeit von Vergleichsbeispeil 1, welche als 100% angenommen wurde, als relative Festigkeit in Tabelle 1 aufgeführt. Tabelle 1 zeigt für das gemäß der Erfindung hergestellte Filament von Beispiel 2 eine höhere Festigkeit als Vergleichsbeispiel 1. Das Filament ist gut mit basischen Farbstoffen färbbar.

Beispiele 3 bis 7

Die Beispiele 3 bis 7 beschreiben die Herstellung von Mischfilamenten aus basisch färbbaren und nicht basisch färbbaren Filamenten, die vor der Strecktexturierung zuzammengeführt und gleichzeitig strecktexturiert werden.

Die Charakteristik der eingesetzten Polymere aus Polyethylenterephthalat und Zusätzen von SIP und Verbindung A zeigt Tabelle 2:

Tabelle 2

| Beispiel | Zusatz SIP (%) | Zusatz A (%) | $x_1$ | y bzw. $y_1$ | $x_1 \cdot y_1$ | Relative Festigkeit der texturierten Filamente (%) |
|---|---|---|---|---|---|---|
| 3 (Vergleich) | 3,4 | – | – | – | – | 100 |
| 4 (Vergleich) | 3,0 | 1*) | $x_1 = 2$ | $y_1 = 9$ | 18 | 102 |
| 5 (Vergleich) | 3,0 | 6*) | $x_1 = 6$ | $y_1 = 1$ | 6 | 75 |
| 6 | 3,0 | 6*) | $x_1 = 2$ | $y_1 = 90$ | 180 | 183 |
| 7 | 3,0 | 6*) | – | $y = 34$ | – | 119 |

*) Polyalkylenglykol.

Beispiele 3 bis 5 sind nicht gemäß der Erfindung, während Filamente der Beispiele 6 und 7 gemäß der Erfindung hergestellt sind.

Die Polymere wurden in gleicher Weise wie bei den Beispielen 1 und 2 zu Filamenten mit 100 dtex und 12 Einzelfilamenten versponnen. Auf der gleichen Spinnmaschine wurde anschließend Polyethylenterephthalat-Polymer ohne Zusätze von SIP und Verbindung A zu Filamenten mit Titer 150 dtex und 36 Einzelfilamenten bei einer Spinngeschwindigkeit versponnen, die 0-40% niedriger liegt als 3100 m/min. Die Filamente mit Titer 100 f 12 wurden jeweils zusammen mit einem Filament mit Titer 150 f 36 einer Magentspindel-Strecktexturiermaschine vorgelegt, wobei die beiden Filamente vor dem Strecktexturieren zusammengeführt und gemeinsam strecktexturiert wurden. Die Einstellung der Strecktexturiermaschine entsprach derjenigen von den Beispielen 1 und 2 mit Ausnahme des Falschzwirns, der auf 2514 T/m reduziert wurde. Die aus beiden Teilen bestehenden strecktexturierten Mischfilamente wurden mit dem gleichen Zugprüfgerät auf Festigkeit geprüft, wobei die gemessenen relativen Festigkeiten in Tabelle 2 aufgeführt sind. Tabelle 2 zeigt, daß gegenüber den Vergleichsbeispielen 3 bis 5 die erfindungsgemäßen Filamente von Beispiel 6 und 7 höhere relative Festigkeit aufweisen.

Alle Mischfilamente wurden mit basischen Farbstoffen Basacrylblau GL der BASF AG und Zusatz eines Carriers Carolied der Tanatex Chem. Corp. gefärbt, wobei die Filamente aus Polymeren mit Zusätzen von SIP eine tiefblaue Färbung zeigten, während die Teilfäden aus Polymeren ohne SIP nicht angefärbt wurden, wodurch zweifarbige Mischfilamente erhalten wurden. Während die Filamente der Vergleichsbeispiele 3 bis 5 bei der Weiterverarbeitung zu Schwierigkeiten führten, waren die Filamente der erfindungsgemäßen Beispiele 6 und 7 dank ihrer höheren Festigkeit problemlos zu verarbeiten.

Beispiele 8 bis 13

Die Beispiele 8 bis 13 beschreiben die Herstellung von Mischfilamenten aus basisch färbbaren Filamenten und nicht basisch färbbaren Filamenten, die bereits nach dem Extrudieren und Abkühlen zusammengeführt and anschließend strecktexturiert werden.

Für diese Beispiele wurden die in Tabelle 3 angegebenen Polymere aus Polyethyleneterephthalat und Zusätze von SIP und Verbindung A eingesetzt.

Tabelle 3

| Beispiel | Zusatz SIP (%) | Zusatz A (%) | $x_1$ | y bzw. $y_1$ | $x_1 \cdot y_1$ | Relative Festigkeit der texturierten Filamente (%) |
|---|---|---|---|---|---|---|
| 8 (Vergleich) | 3,4 | 0 | – | – | – | 100 |
| 9 | 3,0 | 4*) | $x_1 = 2$ | $y_1 = 34$ | 68 | 174 |
| 10 | 3,0 | 4*) | $x_1 = 2$ | $y_1 = 450$ | 900 | 178 |
| 11 | 3,4 | 4*) | $x_1 = 2$ | $y_1 = 90$ | 180 | 158 |
| 12 | 3,4 | 4*) | $x_1 = 2$ | $y_1 = 90$ | 180 | 197 |
| 13 | 3,0 | 5***) | $x_1 = 2$ | $y_1 = 68$ | 66 | 150 |
| | | | | $y_1 = 33$ | | |

*) Polyalkylenglykol.
***) UNEM 9991® von Unilever Emery.

Das Filament von Beispiel 8 ist gemäß bisherigem Stand der Technik hergestellt, währenddem die Filamente der Beispiele 9 bis 13 gemäß der Erfindung hergestellt sind.

Die Polymere wurden getrocknet und auf einer Spinnmaschine zur gleichzeitigen Verarbeitung von 2 Polymeren zu Filamenten extrudiert. Diese Maschine (Cospinnmaschine) besitzt 2 separate Leitungen E und F, die zu einer gemeinsamen Spinndüsenplatte führen, wo aus einem Anteil an auf der Spinndüse vorhandenen Kappillaren Polymer aus Leitung E und aus einem anderen Anteil and Kapillaren Polymer aus Leitung F extrudiert wird. Nach Abkühlung werden die Filamente zu einem Mischfilament konvergiert, mit Präparation versehen und bei 3300 m/min aufgewickelt.

Die Polymere gemäß Tabelle 3 wurden jeweils in Leitung E extrudiert, während in Leitung F Polyethylenterephthalat ohne Zusätze von SIP und Verbindung A verarbeitet wurde. Das erhaltene Mischfilament hatte einen Titer von 235 dtex und 48 Einzelfilamente.

Die Mischfilamente mit Polymer E und mit Polymer F aus den Beispielen 8 bis 11 wurden auf einer Magnetspindel-Strecktexturiermaschine texturiert, wobei gegenüber der Einstellung bei Beispielen 3 bis 7 das Streckverhältnis auf 1,35 reduziert wurde. Die Mischfilamente mit Polymer F gemäß Beispielen 12 und 13 wurden auf einer Friktions-Strecktexturiermaschine mit Streckverhältnis 1,48, Temperatur 190°C und einer Geschwindigkeit von 600 m/min texturiert.

Die Festigkeit der erhaltenen Mischfilamente wurde mit einem Zugprüfgerät Textimat geprüft. Die relativen Festigkeiten sind in Tabelle 3 aufgeführt. Gegenüber Vergleichsbeispiel 8 weisen die gemäß der Erfindung hergestellten Fäden aus Beispielen 9 bis 13 höhere Festigkeiten auf. Die Filamente aus Polymeren gemäß Tabelle 3 sind gut mit basischen Farbstoffen färbbar und ergeben keine Schwierigkeiten bei der Weiterverarbeitung.

Die positiven Eigenschaften der erfindungsgemäßen Filamente bleiben erhalten, wenn die Filamente im Anschluß an die Strecktexurierung in einem zweiten Heizer fixiert werden und/oder mit einer entsprechenden Luftdüse verwirbelt werden. Ebenso bleiden die positiven Eigenschaften der erfindungsgemäßen Filamente erhalten, wenn andere Titer oder andere Spinngeschwinkigkeiten und Strecktexturiergeschwindigkeiten angewendet werden. Die positiven Eigenschaften bleiden ebenso erhalten, wenn diese Filamente mit Filamenten oder Stapelfasergarnen aus synthetischen oder natürlichen Fasern zu Fäden gefachtet werden.

## Patentansprüche

1. Strecktexturierter, basisch färbbarer Polyesterfaden mit verbesserter Festigkeit, dadurch gekennzeichnet, dass er 3,0 -3,4 mol.-% eines Metallsulfonats mit folgender Struktureinheit

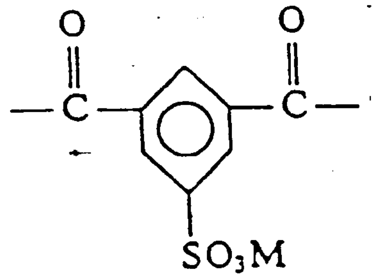

wobei M gleich Na oder K ist, und 4,0 - 6,0 Gew.-% einer Verbindung A mit folgenden Struktureinheiten -0- $(C_{x1}H_{2x1}O)_{y1}$ -, wobei $_{x1} \geqq 2$ und $_{x1y1} \geqq 20$ ist, enthält, die vor Beginn der Veresterung/Umesterung zugegeben wurden.

2. Faden gemäss Anspruch 1, dadurch gekennzeichnet, dass das Metallsulfonat 3,5 -Isophthalsäurenatriumsulfonat ist.

3. Faden gemäss Ansprüchen 1 und 2, dadurch gekennzeichnet, dass die Verbindung A ein Polyethylenglykol, Polypropylenglykol, Polytetramethylenglykol oder Polyethylenpropylenglykol ist.

4. Faden gemäss Anspruch 1, dadurch gekennzeichnet, dass die Verbindung A

$$HOCH_2CH_2OOC\text{-}C_{34}H_{68}\text{-}COOCH_2CH_2OH$$

oder

$$HOCH_2CH_2OOC\text{-}C_{34}H_{68}\text{-}COO\text{-}(CH_2CH_2O)_{Y1}\text{-}COC_{34}H_{68}COOCH_2CH_2OH,$$

wobei $_{y1}$ gleich 22, 23 oder 90 ist.

5. Faden gemäss Ansprüchen 1 bis 4, dadurch gekennzeichnet, dass er eine zweite Komponente enthält, die aus einem künstlichen und/oder natürlichen Filament oder Fasergarn besteht.

6. Faden gemäss Anspruch 5, dadurch gekennzeichnet, dass der Anteil der zweiten Komponente zwischen 0 und 95 % liegt.

7. Faden gemäss Anspruch 5, dadurch gekennzeichnet, dass das künstliche Filament strecktexturiert ist.

8. Faden gemäss den Ansprüchen 5 bis 7, dadurch gekennzeichnet, dass das künstliche Filament oder Fasergarn aus Polyester, Viskose, Acryl oder Polyamid und das natürliche Fasergarn aus Wolle oder Baumwolle besteht.

**Claims**

1. Draw-textured, basic dyeable polyester yarn with improved tenacity characterised in that it contains 3,0-3,4 mol-% of a metalsulfonate with the following chemical structure

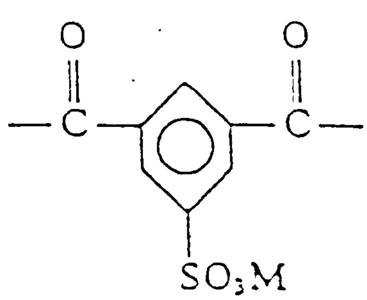

where M is Na or K, and 4,0-6,0 % in weight of a compound A with following chemical structure $-O-(C_{x1}H_{2x1}O)_{y1}-$, where $x_1 \geqq 2$, and $x_1y_1 \geqq 20$ added prior to esterification/transesterification.

2. A yarn according to claim 1, characterised in that the metalsulfonate is the sodium salt of the 3,5-sulfoisophthalic acid.

3. A yarn according to claims 1 and 2, characterised in that the compound A is a polyethyleneglycol, polypropyleneglycol, polytetramethyleneglycol or polyethylenepropyleneglycol.

4. A yarn according to claim 1, characterised in that the compound A is

$$HOCH_2CH_2OOC-C_{34}H_{68}-OOCH_2CH_2OH$$

or

$$HOCH_2CH_2OOC-C_{34}H_{68}-COO-(CH_2CH_2O)y_1-COC_{34}-H_{68}-COOCH_2CH_2OH,$$

where $y_1$ is equal to 22, 33 or 90.

5. A yarn according to claims 1 to 4, characterised in that it contains a second constituent of a natural and/or a synthetic filament or a staple yarn.

6. A yarn according to claim 5, characterised in that the ratio of the second constituent is between 0 and 95%.

7. A yarn according to claim 5, characterised in that the synthetic filament is draw-textured.

8. A yarn according to claims 5 to 7, characterised in that the synthetic filament or staple yarn is polyester, viscose, acrylic or polyamide and the natural staple yarn is wool or cotton.

## Revendications

1. Fil polyester texturé à l'étirage teint, avec des colorants basiques et ayant une ténacité améliorée, caractérisé en ce qu'il contient 3.0- 3.4 % mol d' un sulfonate de structure générale

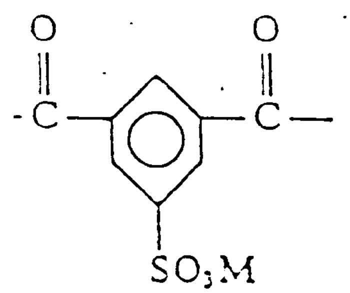

dans laquelle M est Na ou K et 4.0-6.0 % par poids d' un composé A comprenant les structures élémentaires suivantes $-O-(C_{x1}H_{2x1}O)_{y1}-$ dans lesquelles $x_1 \geqq 2$, et $x_1y_1 \geqq$ qui est ajouté avant la réaction d'estérification ou de transestérification.

2. Fil selon la revendication 1, caractérisé en ce que le sulfonate est le sel de sodium de l'acide 3.5-sulfoisophthalique.

3. Fil selon les revendications 1 et 2, caractérisé en ce que le composé A est un polyéthylèneglycol, un polypropylèneglycol, un polytétraméthylèneglycol ou un polyéthylènepropylèneglycol.

4. Fil selon la revendication 1, caractérisé en ce que le composé A a la formule chimique $HOCH_2CH_2OOC-C_{34}-H_{68}-COOCH_2CH_2OH$ ou $HOCH_2CH_2OOC-C_{34}H_{68}COO-(CH_2CH_2O)y_1COC_{34}-H_{68}COOCH_2CH_2OH$ dans lesquelles $y_1 = 22, 33$ ou 90.

5. Fil selon la revendications 1 à 4 caractérisé en ce qu'il contient un deuxième composant qui est un filament ou une fibre naturelle et/ou synthétique.

6. Fil selon la revendication 5, caractérisé en ce que la proportion du deuxième composant est entre 0 et

95 %.

7. Fil selon la revendication 5 caractérisé en ce que le filament synthétique est texturé à l'étirage.

8. Fil selon la revendications 5 à 7 caractérisé en ce que le filament ou la fibre synthétique est du polyester, de la viscose, de l'acrylique ou du polyamide et de la fibre naturelle, de la laine ou du coton.